# EUROPÄISCHE PATENTSCHRIFT

(11) **EP 3 620 701 B1**
(45) Veröffentlichungstag und Bekanntmachung des Hinweises auf die Patenterteilung: **17.01.2024**
(21) Anmeldenummer: 19196286.9
(22) Anmeldetag: 09.09.2019
(51) Int. Cl.: F16L 3/22, F16L 3/24, F16L 3/227

(54) **INSTALLATIONSKLAMMER**
INSTALLATION CLIP
ATTACHE D'INSTALLATION

(30) Priorität: 10.09.2018 DE 102018121980
(43) Veröffentlichungstag der Anmeldung: 11.03.2020
(73) Patentinhaber: WALDNER Laboreinrichtungen SE & Co. KG, 88239 Wangen im Allgäu (DE)
(72) Erfinder: Schäfer, Ivo, 88239 Wangen im Allgäu (DE); Mattivi, Marco, 88239 Wangen im Allgäu (DE); Kneppler, Norbert, 88167 Stiefenhofen (DE)
(74) Vertreter: Maiwald GmbH

(56) Entgegenhaltungen:
- EP-A2- 1 096 594
- CH-A- 494 905
- DE-A1- 3 427 173
- DE-C- 765 091

## Beschreibung

Die vorliegende Erfindung betrifft eine Installationsklammer zum Einsetzen in eine C-förmige Profilschiene, die eine Ausnehmung aufweist, zur Verlegung von Medienleitungen in einem Laborraum.

Medienleitungen in Laborräumen dienen vornehmlich dem Zweck, die Labormedien, wie zum Beispiel Gas, Wasser, Luft, Strom, Daten etc., von einem gebäudetechnischen Bereitstellungspunkt dorthin zu führen, wo das Laborpersonal die Labormedien bequem entnehmen kann. Solche Entnahmestellen können eine Mediendecke, eine Medienzelle, ein an der Decke befestigter Medienflügel, eine Medienampel, eine Mediensäule, eine Medienstation oder ein Medientischaufsatz sein. Auch Abzugszellen seien an dieser Stelle erwähnt. Die Medienleitungen dienen aber nicht nur der Zufuhr von Labormedien, sondern auch der Entsorgung von Labormedien, wie zum Beispiel der Abfuhr von Abluft sowie von Abwasser. Aber auch die Erzeugung von Vakuum, bei der Luft abgeführt werden muss, erfolgt über derartige Medienleitungen.

Das Material, aus dem die Medienleitungen herkömmlich gefertigt sind, hängt vornehmlich von dem durch die Leitung zu transportierenden Labormedium ab. Die Medienleitungen werden herkömmlich an sog. C-förmigen Profilschienen befestigt. Diese Profilschienen können beispielsweise ein Lochraster aufweisen, mittels dem die Profilschiene an einem gewünschten Ort befestigt werden kann, und eine C-Form im Querschnitt, d.h. quer zur Längsrichtung der Profilschiene auf.

Zur Befestigung der Medienleitungen an den Profilschienen gibt es verschiedene Möglichkeiten. So gibt es beispielsweise Rohrschellen, die mittels einer Hammerkopfschraube an der Profilschiene befestigt werden. Die Öffnungsgröße der Rohrschelle kann über eine entsprechend vorgesehene Schraube verändert werden. Darin wird dann die zu verlegende Medienleitung eingesetzt.

Es gibt aber auch Reihenschellen, die über eine Platte, welche in die C-förmige Profilschiene eingesetzt wird, und über ein aus Kunststoff gefertigtes Gegenstück verfügen, welches mittels einer Schraube relativ zu der Platte bewegt werden kann, sodass durch Festziehen der Schraube das Gegenstück und die Platte mit der Profilschiene fest verklemmt werden. Auf der Ober- und Unterseite des Kunststoffgegenstücks ist eine V-förmige Ausnehmung vorgesehen, in die nun eine Leitung eingelegt werden kann. Eine weitere Installationsklammer wird dann oberhalb der Leitung so angeordnet, dass deren V-förmige Ausnehmung an der Unterseite der Installationsklammer die Oberseite der Leitung umgreift.

Alternativ können Klammern verwendet werden, welche in ein in den C-förmigen Profilschienen vorgesehenes Lochbild eingehängt werden.

Aus CH 494 905 A ist eine Klemmeinrichtung für eine C-Schiene bekannt, die mittels zweier Backen zumindest teilweise formschlüssig in einer C-Schiene gehalten werden. Die Backen werden mittels eines Spreizkeiles so weit auseinandergetrieben, bis sie in der C-Schiene klemmend gehalten werden.

DE 765 091 C offenbart eine Installationsklammer für eine C-förmige Schiene, die an ihren freien Backenenden jeweils einen C-förmigen Abschnitt aufweist. Die C-förmigen Abschnitte umgreifen im eingesetzten Zustand einen kurzen Schenkel der C-förmigen Schiene.

In DE 101 28 628 A1 ist eine Klemme beschrieben, mittels derer Kabel und/oder Rohre bei Haushaltsgeräten verlegt werden können. Die freien Enden der Backen werden nicht in einer Schiene aufgenommen.

In DE 10 2009 045 499 A1 ist eine Leitungsfestlegeeinrichtung beschrieben, die über insgesamt zwei Backenpaare verfügt, und die paarweise in eine C-Schiene eingesetzt werden. Eine zu verlegende Leitung verläuft hierbei zwischen den Backenpaaren und wird mittels einer Klemmplatte geklemmt. Die Backenpaare werden erst fest mit der C-Schiene verklemmt, wenn die Klemmplatte fest an der zu verlegenden Leitung anliegt.

DE 20 2012 102 394 U1 offenbart eine Klemme, mit Hilfe derer elektrische Leiter an einem Profilträger montiert werden können.

Als nachteilig bei diesen Befestigungsmöglichkeiten wird empfunden, dass nur mit relativ hohem Arbeitsaufwand die mitunter sehr zahlreichen Medienleitungen in einem Laborraum verlegt und im Nachhinein auch an geänderte Bedürfnisse angepasst werden können.

Es ist daher eine Aufgabe der vorliegenden Erfindung, eine Installationsklammer vorzusehen, die eine einfachere Montage von Medienleitungen in einem Laborraum und mit verringertem Zeitaufwand gewährleistet.

Diese Aufgabe wird durch die im Patentanspruch 1 angegebene Installationsklammer gelöst. Optionale bzw. bevorzugte Merkmale der erfindungsgemäßen Installationsklammer sind in den abhängigen Patentansprüchen 2 bis 14 angegeben.

Gemäß der Erfindung wird eine Installationsklammer zum Einsetzen in eine C-förmige Profilschiene, die eine Aussparung aufweist, zur Verlegung von Medienleitungen in einem Laborraum bereitgestellt, die zwei relativ zueinander bewegliche Backen umfasst, die jeweils ein erstes Ende und ein freies zweites Ende aufweisen, wobei die Backen an den ersten Enden miteinander verbunden sind. Erfindungsgemäß ist ein Abschnitt im Bereich des zweiten Endes jeder Backe so ausgebildet, dass beide Abschnitte einen Formschluss mit der Aussparung des Profils eingehen können. Die Abschnitte beider Backen weisen jeweils eine C-Form mit zwei Seitenschenkeln und einem Verbindungsschenkel, der die Seitenschenkel verbindet, oder eine L-Form mit einem parallel zur jeweiligen Backe verlaufenden Schenkel und einem senkrecht zur jeweiligen Backe verlaufenden Schenkel auf. Zusätzlich sind die Backen derart federelastisch ausgebildet, dass die Abschnitte der beiden Backen nach dem Einsetzen in die Aussparung des Profils klemmend in der Aussparung gehalten werden. Vorteilhaft bei dieser Ausgestaltung ist, dass die Klammer lediglich durch Zusammendrücken der Backen in die Aussparung des Profils eingesetzt werden kann, und sodann durch Loslassen der Backen einen Formschluss mit der Aussparung des Profils eingeht und auf diese Weise fest darin aufgenommen und verklemmt wird. Die Installationsklammer kann also werkzeuglos und ohne hohen Zeitaufwand in die Schiene eingesetzt werden. Weiterhin bevorzugt verläuft eine Längserstreckung beider Backen senkrecht zu den Seitenschenkeln der C-Form der Abschnitte.

Noch bevorzugter stellen die Abschnitte beider Backen jeweils einen Endabschnitt der Backe dar, welcher das freie zweite Ende aufweist.

Gemäß einer weiteren bevorzugten Ausführungsform der Erfindung stellt ein freier Seitenschenkel der C-Form oder der parallel zurBacke verlaufende Schenkel das jeweilige freie zweite Ende einer der Backen dar.

Weiterhin bevorzugt ist es, wenn zumindest eine freie Ecke des freien Seitenschenkels der C-förmigen Abschnitte oder des parallel zur Backe verlaufenden Schenkels abgeknickt ist. Wird im eingesetzten Zustand eine Kraft auf die Installationsklammer ausgeübt, beispielweise wenn die Gewichtskraft einer Medienleitung auf die Installationsklammer wirkt, so verkrallt sich mindestens ein, vorzugsweise alle vier abgenickten Ecken in die Profilschiene mit der Folge, dass ein Verschieben der Installationsklammer innerhalb und entlang der Profilschiene wirkungsvoll unterbunden wird.

Als besonders bevorzugt angesehen wird es, wenn zumindest benachbarte Stirnseiten der Backen jeweils eine Ausnehmung aufweisen.

Weiterhin bevorzugt ist es, wenn beide Stirnseiten jeder Backe jeweils eine Ausnehmung aufweisen. Somit kann die Installationsklammer beidseitig für die Montage von rohrförmigen Medienleitungen verwendet werden.

Vorzugsweise ist die Ausnehmung V-förmig ausgebildet. Durch die V-Form wird gewährleistet, dass unterschiedlich dimensionierte Medienleitungen mittels der Installationsklammer montiert werden können, und dass die Befestigungsachse für sämtliche Rohre gleich bleibt.

Besonders bevorzugt ist es, wenn die ersten Enden beider Backen über einen Verbindungsabschnitt miteinander verbunden sind, und wenn der Verbindungsabschnitt eine Öffnung aufweist. Durch diese vorteilhafte Weiterbildung der Erfindung kann eine zweite C-förmige Profilschiene an der Installationsklammer befestigt werden mit der Folge, dass mehrere Medienleitungen in mehreren hintereinander liegenden Ebenen sehr platzsparend verlegt werden können.

Ganz besonders bevorzugt weist die Installationsklammer einen einteiligen Aufbau auf. Dies vereinfacht die Herstellung und senkt die Kosten.

Noch bevorzugter ist die Installationsklammer aus einem Metall hergestellt. Dadurch kann eine Erdung der Medienleitungen zentral über die Installationsklammern und die Profilschienen erfolgen.

Gemäß einer bevorzugten Ausführungsform der Erfindung ist die Installationsklammer aus Federbandstahl hergestellt. Der Federbandstahl hat den Vorteil, dass beim Loslassen der Backen, nachdem diese in die Profilschiene eingesetzt worden sind, aufgrund der Rückstellkraft des Federbandstahls die Backen eigenständig den Formschluss mit der Profilschiene eingehen, somit also keine weiteren Hilfsmittel benötigt werden, um die Backen in der Eingriffsstellung mit der Profilschiene zu arretieren.

Vorzugsweise weist der Federbandstahl eine Dicke auf, die in einem Bereich von 0,6 mm bis 1,2 mm liegt. Vorzugsweise beträgt die Dicke 0,8 mm.

Noch bevorzugter weisen die Abschnitte beider Backen eine Breite senkrecht zur Längserstreckung der Backen auf, die in einem Bereich von 10 mm bis 30 mm liegt, vorzugsweise 12 mm beträgt. Eine Reihe von Versuchen hat ergeben, dass eine Breite von 12 mm als das Optimum hinsichtlich der Fertigungskosten, der Installationsdichte und der Handhabung angesehen wird.

Die Erfindung wird nun rein beispielhaft anhand der beigefügten Figuren beschrieben, von denen:
Fig. 1 eine Installationsklammer gemäß einer bevorzugten Ausführungsform der Erfindung darstellt; und
Fig. 2 einen Ausschnitt eines Medienleitungsnetzes darstellt, das mittels der in Fig. 1 dargestellten Installationsklammer an C-förmigen Profilschienen angebracht ist.

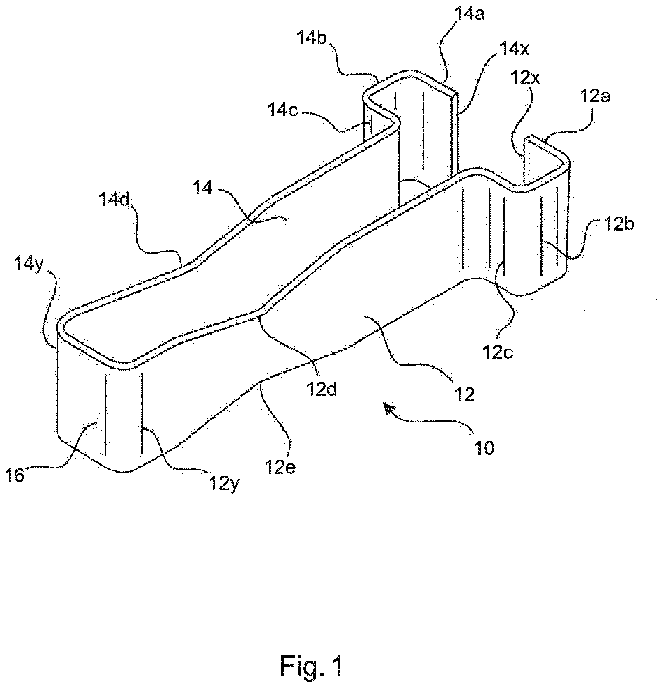

Die in Figur 1 dargestellte Installationsklammer 10 ist vorzugsweise aus einem Metall hergestellt, noch bevorzugter aus einem federelastischen oder eigenelastischen metallischen Werkstoff. Vorzugsweise wird ein Federbandstahl (Werkstoff Nr. 1.4310) verwendet, der eine Dicke besitzt, die in einem Bereich von vorzugsweise 0,6 mm bis 1,2 mm liegt. Noch bevorzugter beträgt die Dicke 0,8 mm.

Die Installationsklammer 10 wird vorzugsweise mittels eines Stanz-Biege-Prozesses aus dem Federbandstahl gefertigt. Zu Entgratung der Kanten wird der Federbandstahl glattgeschliffen. Dieser Bearbeitungsschritt wird herkömmlich auch als Trovalisierung bezeichnet.

Die erfindungsgemäße Installationsklammer 10 umfasst zwei relativ zueinander bewegliche Backen 12, 14. Jede Backe 12, 14 weist ein erstes Ende 12y, 14y und ein gegenüberliegendes freies zweites Ende 12x, 14x auf. Die Backen sind jeweils an ihrem ersten Ende 12y, 14y über vorzugsweise einen Verbindungsabschnitt 16 miteinander verbunden. Dieser Verbindungsabschnitt 16 ist aber nicht zwingend notwendig.

Im Bereich des zweiten freien Endes 12x, 14x ist vorzugsweise der Endabschnitt jeder Backe 12, 14, d.h. derjenige Abschnitt, der sich über einen vorbestimmten Bereich proximal von dem freien zweiten Ende 12x, 14x erstreckt, C-förmig ausgestaltet. Der C-förmige Abschnitt 12a, 12b, 12c der Backe 12 und der C-förmige Abschnitt 14a, 14b, 14c der Backe 14 können auch in proximaler Richtung beabstandet von dem freien Ende 12x, 14x der jeweiligen Backe 12, 14 angeordnet sein. Mit anderen Worten, der C-förmige Abschnitt 12a, 12b, 12c einerseits und der C-förmige Abschnitt 14a, 14b, 14c anderseits müssen nicht dem Endabschnitt der jeweiligen Backe 12, 14 entsprechen. Ein Endabschnitt in diesem Sinne wird als derjenige Abschnitt verstanden, der das freie zweite Ende 12x, 14x umfasst.

Der C-förmige Abschnitt 12a, 12b, 12c der Backe 12 und C-förmige Abschnitt 14a, 14b, 14c der Backe 14 umfassen jeweils zwei Seitenschenkel 12a, 12c; 14a, 14c und einen die Seitenschenkel 12a, 12c; 14a, 14c jeweils verbindenden Verbindungsschenkel 12b, 14b.

Gemäß einer alternativen Ausführungsform der Erfindung können die Backen 12, 14 auch L-förmig sein, d.h. im Wesentlichen die in Fig. 1 dargestellt Form aufweisen, allerdings ohne die freien Seitenschenkel 12a, 14a. Bei dieser Ausführungsform wäre demnach das freie Ende 12x der Backe 12 an dem Schenkel 12b und das freie Ende 14x der Backe 14 an dem Schenkel 14b vorgesehen.

Die Abschnitte beider Backen, die den Formschluss eingehen, besitzen bei beiden Ausführungsformen der Erfindung vorzugsweise eine Breite senkrecht zur Längserstreckung der Backen, die in einem Bereich von 10 mm bis 30 mm liegt, vorzugsweise 12 mm beträgt. Eine Breite von 12 mm hat sich im Rahmen mehrerer Versuche als das Optimale hinsichtlich der Fertigungskosten, der Installationsdichte und der Handhabung herausgestellt.

Vorzugsweise ist mindestens eine freie Ecke jedes Seitenschenkels 12a, 14a abgeknickt. Noch bevorzugter sind die abgeknickten Enden der Seitenschenkel 12a, 14a diagonal gegenüberliegend angeordnet. Noch bevorzugter sind alle 4 Ecken beider Seitenschenkel 12a, 14a abgeknickt.

Nach einer bevorzugten Ausgestaltung der Erfindung weist eine Stirnseite, d.h. die schmale Seite, der Backe 12 und eine Stirnseite der Backe 14 eine Ausnehmung auf. Vorzugsweise sind die Ausnehmungen 12d, 14d V-förmig ausgebildet, wie dies in Fig. 1 dargestellt ist. Vorzugsweise sind die gegenüberliegenden Stirnseiten, d.h. die in Fig. 1 nach unten gerichtete Stirnseite der Backe 12 und der Backe 14 mit einer Ausnehmung 12e (die Ausnehmung auf der Stirnseite der Backe 14 müsste mit dem Bezugszeichen 14e bezeichnet werden; diese ist allerdings in Fig. 1 nicht zu sehen) versehen, die ebenso vorzugsweise V-förmig ausgestaltet sind.

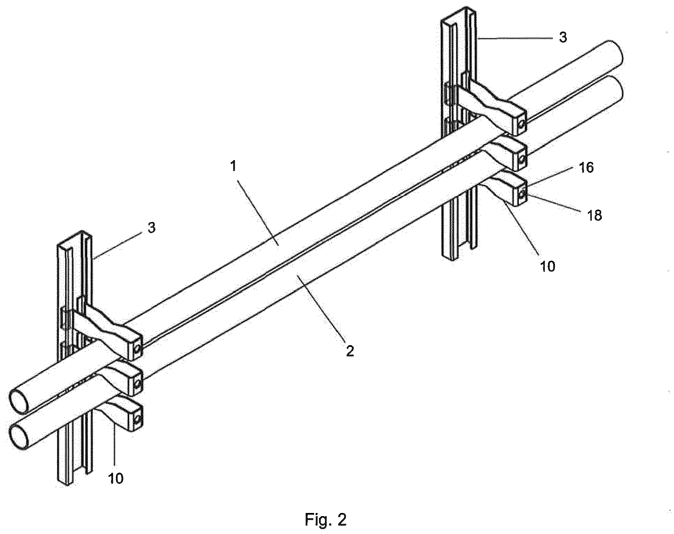

Wenn die Installationsklammer vorzugsweise aus einem federelastischen oder eigenelastischen Werkstoff, beispielsweise aus einem Federbandstahl hergestellt ist, so sind im entspannten Zustand die Backen 12, 14 weiter gespreizt bzw. sind weiter voneinander beabstandet als in Fig. 1 dargestellt. In jedem Fall müssen die Backen 12, 14 für den Einbau in beispielsweise eine C-förmige Installationsschiene 3 (Fig. 2) zunächst soweit zusammengedrückt werden, bis sie in den C-förmigen Hohlraum der Profilschiene 3 eingesetzt werden können. Sodann werden die Backen 12, 14 losgelassen und bewegen sich aufgrund der zuvor aufgebrachten Vorspannung und unter Mitwirkung der Rückstellkraft wieder weiter auseinander, bis die Backen 12, 14, genauer die C-förmigen Abschnitte 12a, 12b, 12c und 14a, 14b, 14c bei der in Fig. 1 dargestellten Ausführungsform einen Formschluss mit der Profilschiene 3 eingehen und in dieser verklemmt werden. Aufgrund der Tatsache, dass beim Eingehen des Formschlusses die Backen 12, 14 noch nicht ihren entspannten Zustand erreicht haben, wird zusätzlich zu dem Formschluss eine Klemmkraft zwischen den Backen 12, 14 und der Profilschiene 3 erzeugt.

Die Installationsklammer 10 ist somit in zweierlei Hinsicht innerhalb der C-förmigen Installationsschiene 3 gesichert. Einserseits verhindert der Formschluss ein Herausfallen der Installationsklammer 10 aus der Installationsschiene 3, d.h. eine Bewegung in eine Richtung senkrecht zur Längserstreckung der Installationsschiene 3. Andererseits verhindert die Klemmkraft bzw. der Kraftschluss eine Bewegung der Installationsklammer 10 innerhalb der C-förmigen Aussparung in Längsrichtung der Installationsschiene 3. Die Installationsklammer 10 eignet sich somit sowohl für den horizontalen wie auch für den vertikalen Einbau in eine C-förmige Installationsschiene. Selbst ein Über-Kopf-Einbau an einer an der Decke eines Raumes montierten Installationsschiene ist aufgrund des Form- und Kraftschlusses möglich.

An dieser Stelle sei erwähnt, dass die erfindungsgemäße Installationsklammer in jedes Profil eingesetzt werden kann, das eine Aussparung besitzt, die von ihrer Gestalt her komplementär zu den Abschnitten der Backen ausgebildet ist, die mit der Aussparung einen Formschluss eingehen. Vorzugsweise weist diese Aussparung einen Hinterschneidung auf, welche das Verklemmen der Installationsklammer bei Belastung verbessert. Lediglich vorzugsweise sind die Abschnitte der Backen der Installationsklammer C-förmig ausgebildet, und das Profil ist eine C-förmige Profilschiene.

Fig. 2 zeigt eine Einbausituation von Medienleitungen 1, 2 an zwei C-förmigen Profilschienen 3. Zur Befestigung der Medienleitungen 1, 2, die hier vorzugsweise mit einem kreisförmigen Querschnitt dargestellt sind, an den Profilschienen 3 werden die Installationsklammern 10 verwendet. Die im entspannten Zustand gespreizten Backen 12, 14 werden zu diesem Zweck in radialer Richtung zusammengedrückt, sodass die freien Enden 12x, 14x sich berühren (oder soweit beabstandet sind, dass sie in die Profilschiene eingesetzt werden können). In diesem Zustand kann die Installationsklammer 10 in die C-förmige Profilschiene 3 eingesetzt und in der richtigen Höhe angeordnet werden. Ist die gewünschte Höhe erreicht, werden die Backen 12, 14 entspannt, sodass die C-förmigen Abschnitte 12a, 12b, 12c und 14a, 14b, 14c der Backen 12, 14 formschlüssig in der C-förmigen Profilschiene 3 aufgenommen werden. Dieser Formschluss zusammen mit der weiterhin radial nach außen wirkenden Vorspannung stellt eine sichere Verklemmung der Installationsklemme 10 bei Belastung sicher. Die abgeknickten Ecken der Seitenschenkel 12a, 14a verstärken bei Belastung der Installationsklammer 10 die Klemmkraft und verhindern zusätzlich ein Verrutschen der Installationsklammer 10 entlang der C-förmigen Profilschiene 3.

Die Medienleitung 2 wird sodann lediglich in die V-förmige Ausnehmung 12d, 14d der Backen 12, 14 eingelegt. Direkt darüber wird eine weitere Installationsklammer 10 in die C-förmige Profilschiene 3 eingesetzt und der Höhe nach so weit verschoben, bis sie an der Medienleitung 2 anliegt. Aufgrund der V-Form der Ausnehmung kann die Medienleitung 2 in lateraler Richtung, d.h. senkrecht zu ihrer Längserstreckung nicht aus der Installationsklammer 10 heraus bewegt werden. Im Anschluss wird die Medienleitung 1 auf die unmittelbar zuvor eingesetzte Installationsklammer 10 gelegt und durch eine weitere, oberhalb der Medienleitung 1 angeordnete Installationsklammer 10 gesichert.

Durch die mittels der erfindungsgemäßen Installationsklammer 10 an den C-förmigen Profilschienen 3 zu befestigenden Medienleitungen 1, 2 werden herkömmliche Labormedien zu- und abgeführt. Zu diesen Labormedien zählen insbesondere Gas, Wasser, Luft, Druckluft, Hoch- und Niedervoltspannungen, sowie Daten. Labormedien, die abgeführt werden müssen sind insbesondere Abluft, Abwasser und Daten. Auch die Abfuhr von Luft zur Erzeugung eines Vakuums kann mittels einer derartigen Medienleitung erfolgen.

Wie in Fig. 2 des Weiteren zu sehen ist, umfasst vorzugsweise der Verbindungsabschnitt 16, der die ersten Enden 12y, 14y der Backen 12, 14 verbindet, eine Öffnung 18, an der eine weitere Profilschiene 3 mittels einer Schraube befestigt werden kann. Auf diese Weise können auf sehr platzsparende Weise mehrere hintereinanderliegende Ebenen von Medienleitungen erzeugt werden.

Die erfindungsgemäße Installationsklammer 10 kann werkzeuglos mit der C-förmigen Profilschiene 3 in Eingriff gebracht werden. Im Rahmen verschiedener messtechnischer Versuche wurde ermittelt, dass zur sicheren Befestigung der Installationsklammer 10 in der C-förmigen Profilschiene 3 und um zu vermeiden, dass die Installationsklammer 10 bei größerer Belastung nach unten entlang der Profilschiene 3 verrutscht, die Breite des C-förmigen Endabschnitts 12a, 12b, 12c und 14a, 14b, 14c, d.h. senkrecht zur Längserstreckung der Backen 12, 14, vorzugsweise in einem Bereich von 10 mm bis 30 mm liegt, vorzugsweise 12 mm beträgt.

Der metallische Werkstoff, der zur Herstellung der Installationsklammer 10 verwendet wird, hat zudem den Vorteil, dass eine elektrische Erdung der Medienleitungen 1, 2 zentral über die Installationsklammern 10 und die Profilschienen 3 erfolgen kann. Ebenso gewährt der metallische Werkstoff einen hinreichenden Brandschutz, der im Falle einer aus Kunststoff oder aus einem anderen brennbaren Material gefertigten Installationsklammer 10 anderweitig sichergestellt werden müsste.

## Patentansprüche

1. Installationsklammer (10) zum Einsetzen in eine C-förmige Profilschiene (3), die eine Aussparung aufweist, zur Verlegung von Medienleitungen (1, 2) in einem Laborraum, umfassend zwei relativ zueinander bewegliche Backen (12, 14), die jeweils ein erstes Ende (12y, 14y) und ein freies zweites Ende (12x, 14x) aufweisen, wobei die Backen (12, 14) an den ersten Enden (12y, 14y) miteinander verbunden sind, und wobei im Bereich des zweiten Endes (12x, 14x) jeder Backe (12, 14) ein Abschnitt (12a, 12b, 12c; 14a, 14b, 14c) vorgesehen ist, der eine C-Form (12a, 12b, 12c; 14a, 14b, 14c) mit zwei Seitenschenkeln (12a, 12c; 14a, 14c) und einem Verbindungsschenkel (12b, 14b), der die Seitenschenkel (12a, 12c; 14a, 14c) verbindet, oder eine L-Form (12b, 12c; 14b, 14c) mit einem parallel zur Backe verlaufenden Schenkel (12b, 14b) und einem senkrecht zur Backe verlaufenden Schenkel (12c, 14c) aufweist, und wobei die Backen (12, 14) derart federelastisch ausgebildet sind, dass die Abschnitte (12b, 12c; 14b, 14c) der beiden Backen (12, 14) nach dem Einsetzen in die Aussparung der Profilschiene (3) klemmend in der Aussparung gehalten werden, **dadurch gekennzeichnet, dass** die zwei Seitenschenkeln (12a, 12c; 14a, 14c) und der Verbindungsschenkel (12b, 14b) der C-förmigen Abschnitte (12a, 12b, 12c; 14a, 14b, 14c) oder die zwei Schenkel (12b, 12c; 14b, 14c) der L-förmigen Abschnitte (12b, 12c; 14b, 14c) so ausgebildet sind, dass sie formschlüssig in die Aussparung der C-förmigen Profilschiene (3) einsetzbar sind.

2. Installationsklammer (10) nach Anspruch 1, soweit der Abschnitt (12a, 12b, 12c; 14a, 14b, 14c) jeder Backe (12, 14) eine C-Form aufweist, **dadurch gekennzeichnet, dass** eine Längserstreckung beider Backen (12, 14) senkrecht zu den Seitenschenkeln (12a, 12c; 14a, 14c) der C-Form der Abschnitte (12a, 12b, 12c; 14a, 14b, 14c) verläuft.

3. Installationsklammer (10) nach einem der vorhergehenden Ansprüche, **dadurch gekennzeichnet, dass** die Abschnitte (12b, 12c; 14b, 14c) beider Backen (12, 14) jeweils einen Endabschnitt der Backe (12, 14) darstellen, welcher das freie zweite Ende (12x, 14x) aufweist.

4. Installationsklammer (10) nach Anspruch 3, **dadurch gekennzeichnet, dass** einer der Seitenschenkeln (12a, 14a) der C-Form oder der parallel zur Backe verlaufende Schenkel (12b, 14b) der L-Form das jeweilige freie zweite Ende (12x, 14x) einer der Backen (12, 14) darstellt.

5. Installationsklammer (10) nach Anspruch 4, **dadurch gekennzeichnet, dass** zumindest eine freie Ecke des freien Seitenschenkels (12a, 14a) der C-förmigen Abschnitte (12a, 12b, 12c; 14a, 14b, 14c) oder des parallel zur Backe verlaufenden Schenkels (12b, 14b) der L-Form abgeknickt ist.

6. Installationsklammer (10) nach einem der vorhergehenden Ansprüche, **dadurch gekennzeichnet, dass** zumindest benachbarte Stirnseiten der Backen (12, 14) jeweils eine Ausnehmung (12d, 14d) aufweisen.

7. Installationsklammer (10) nach Anspruch 6, **dadurch gekennzeichnet, dass** beide Stirnseiten jeder Backe (12, 14) jeweils eine Ausnehmung (12d, 12e, 14d) aufweisen.

8. Installationsklammer (10) nach Anspruch 6 oder 7, **dadurch gekennzeichnet, dass** die Ausnehmung (12d, 12e, 14d) V-förmig ausgebildet ist.

9. Installationsklammer (10) nach einem der vorhergehenden Ansprüche, **dadurch gekennzeichnet, dass** die ersten Enden (12y, 14y) beider Backen (12, 14) über einen Verbindungsabschnitt (16) miteinander verbunden sind, und dass der Verbindungsabschnitt (16) eine Öffnung (18) aufweist.

10. Installationsklammer (10) nach einem der vorhergehenden Ansprüche, **dadurch gekennzeichnet, dass** die Installationsklammer (10) einen einteiligen Aufbau aufweist.

11. Installationsklammer (10) nach einem der vorhergehenden Ansprüche, **dadurch gekennzeichnet, dass** die Installationsklammer (10) aus einem Metall hergestellt ist.

12. Installationsklammer (10) nach einem der vorhergehenden Ansprüche, **dadurch gekennzeichnet, dass** die Installationsklammer (10) aus Federbandstahl hergestellt ist.

13. Installationsklammer (10) nach Anspruch 12, **dadurch gekennzeichnet, dass** der Federbandstahl eine Dicke aufweist, die in einem Bereich von 0,6 mm bis 1,2 mm liegt, vorzugsweise eine Dicke von 0,8 mm aufweist.

14. Installationsklammer (10) nach einem der vorhergehenden Ansprüche, **dadurch gekennzeichnet, dass** die Abschnitte (12a, 12b, 12c; 14a, 14b, 14c) beider Backen (12, 14) eine Breite senkrecht zur Längserstreckung der Backen (12, 14) aufweisen, die im Bereich von 10 mm bis 30 mm liegt, vorzugsweise 12 mm beträgt.

## Claims

1. Installation clip (10) for insertion into a C-shaped profile rail (3), having a recess for routing media lines (1, 2) in a laboratory room, comprising two jaws (12, 14) which are movable relative to one another, each of which has a first end (12y, 14y) and a free second end (12x, 14x), wherein the jaws (12, 14) are connected to one another at the first ends (12y, 14y), and wherein in the region of the second end (12x, 14x) of each jaw (12, 14) a section (12a, 12b, 12c; 14a, 14b, 14c) is provided that has a C-shape (12a, 12b, 12c; 14a, 14b, 14c) with two lateral legs (12a, 12c; 14a, 14c) and one connecting leg (12b, 14b) that connects the lateral legs (12a, 12c; 14a, 14c), or an L-shape (12b, 12c; 14b, 14c) with one leg (12b, 14b) extending parallel to the jaw and one leg (12c, 14c) extending perpendicularly to the jaw, and wherein the jaws (12, 14) are designed resiliently in such a way that after insertion in the recess of the profile rail (3) the sections (12b, 12c; 14b, 14c) of both jaws (12, 14) are retained in the recess in clamped manner, **characterized in that** the two lateral legs (12a, 12c; 14a, 14c) and the connecting leg (12b, 14b) of the C-shaped sections (12a, 12b, 12c; 14a, 14b, 14c) or the two legs (12b, 12c; 14b, 14c) of the L-shaped sections (12b, 12c; 14b, 14c) are designed such that they can be inserted in form fitting manner in the recess in the C-shaped profile rail (3).

2. Installation clip (10) according to Claim 1 if the section (12a, 12b, 12c; 14a, 14b, 14c) of each jaw (12, 14) has a C-shape, **characterized in that** a longitudinal extension of both jaws (12, 14) extends perpendicularly to the lateral legs (12a, 12c; 14a, 14c) of the C-shape of the sections (12a, 12b, 12c; 14a, 14b, 14c).

3. Installation clip (10) according to any one of the preceding claims, **characterized in that** the sections (12b, 12c; 14b, 14c) of both jaws (12, 14) each constitute an end section of the jaw (12, 14), which includes the free second end (12x, 14x).

4. Installation clip (10) according to Claim 3, **characterized in that** one of the lateral legs (12a, 14a) of the C-shape or the leg (12b, 14b) of the L-shape extending parallel to the jaw constitutes the respective free second end (12x, 14x) of one of the jaws (12, 14).

5. Installation clip (10) according to Claim 4, **characterized in that** at least one free corner of the free lateral leg (12a, 14a) of the C-shaped sections (12a, 12b, 12c; 14a, 14b, 14c) or of the leg (12b, 14b) of the L-shape extending parallel to the jaw is kinked.

6. Installation clip (10) according to any one of the preceding claims, **characterized in that** at least adjacent end faces of the jaws (12, 14) each have a recess (12d, 14d).

7. Installation clip (10) according to Claim 6, **characterized in that** both end faces of each jaw (12, 14) each have a recess (12d, 12e, 14d).

8. Installation clip (10) according to claim 6 or 7, **characterized in that** the recess (12d, 12e, 14d) is V-shaped.

9. Installation clip (10) according to any one of the preceding claims, **characterized in that** the first ends (12y, 14y) of both jaws (12, 14) are connected to one another via a connecting section (16), and that the connecting section (16) has an opening (18).

10. Installation clip (10) according to any one of the preceding claims, **characterized in that** the installation clip (10) has a one-piece structure.

11. Installation clip (10) according to any one of the preceding claims, **characterized in that** the installation clip (10) is made of a metal.

12. Installation clip (10) according to any one of the preceding claims, **characterized in that** the installation clip (10) is made of spring band steel.

13. Installation clip (10) according to Claim 12, **characterized in that** the spring band steel has a thickness which is in a range from 0.6 mm to 1.2 mm, preferably has a thickness of 0.8 mm.

14. Installation clip (10) according to any one of the preceding claims, **characterized in that** the sections (12a, 12b, 12c; 14a, 14b, 14c) of both jaws (12, 14) have a width perpendicular to the longitudinal extension of the jaws (12, 14), which is in the range from 10 mm to 30 mm, preferably 12 mm.

## Revendications

1. Pince d'installation (10) à insérer dans un rail profilé en forme de C (3) qui présente un évidement pour la pose de conduites de milieux (1, 2) dans un espace de laboratoire, comprenant deux mâchoires (12, 14) mobiles l'une par rapport à l'autre qui présentent chacune une première extrémité (12y, 14y) et une seconde extrémité libre (12x, 14x), dans laquelle les mâchoires (12, 14) sont reliées entre elles aux premières extrémités (12y, 14y), et dans laquelle, dans la zone de la seconde extrémité (12x, 14x) de chaque mâchoire (12, 14), est prévue une section (12a, 12b, 12c ; 14a, 14b, 14c) qui présente une forme de C (12a, 12b, 12c ; 14a, 14b, 14c) avec deux branches latérales (12a, 12c ; 14a, 14c) et une branche de liaison (12b, 14b) qui relie les branches latérales (12a, 12c ; 14a, 14c) ou une forme de L (12b, 12c ; 14b, 14c) avec une branche (12b, 14b) s'étendant parallèlement à la mâchoire et une branche (12c, 14c) s'étendant perpendiculairement à la mâchoire, et dans laquelle les mâchoires (12, 14) sont réalisées avec une élasticité de ressort, de telle sorte que les sections (12b, 12c ; 14b, 14c) des deux mâchoires (12, 14) soient maintenues après l'insertion dans l'évidement du rail profilé (3) par serrage dans l'évidement, **caractérisée en ce que** les deux branches latérales (12a, 12c ; 14a, 14c) et la branche de liaison (12b, 14b) des sections en forme de C (12a, 12b, 12c ; 14a, 14b, 14c) ou les deux branches (12b, 12c ; 14b, 14c) des sections en forme de L (12b, 12c ; 14b, 14c) sont réalisées de telle sorte qu'elles puissent être insérées par coopération de forme dans l'évidement du rail profilé en forme de C (3).

2. Pince d'installation (10) selon la revendication 1, dans la mesure où la section (12a, 12b, 12c ; 14a, 14b, 14c) de chaque mâchoire (12, 14) présente une forme de C, **caractérisée en ce qu'**une étendue longitudinale des deux mâchoires (12, 14) s'étend perpendiculairement aux branches latérales (12a, 12c ; 14a, 14c) de la forme de C des sections (12a, 12b, 12c ; 14a, 14b, 14c).

3. Pince d'installation (10) selon l'une des revendications précédentes, **caractérisée en ce que** les sections (12b, 12c ; 14b, 14c) des deux mâchoires (12, 14) représentent respectivement une section d'extrémité de la mâchoire (12, 14) qui présente la seconde extrémité libre (12x, 14x).

4. Pince d'installation (10) selon la revendication 3, **caractérisée en ce que** l'une des branches latérales (12a, 14a) de la forme de C ou les branches (12b, 14b) s'étendant parallèlement à la mâchoire de la forme de L représentent la seconde extrémité libre respective (12x, 14x) de l'une des mâchoires (12, 14).

5. Pince d'installation (10) selon la revendication 4, **caractérisée en ce qu'**au moins un coin libre de la branche latérale libre (12a, 14a) des sections en forme de C (12a, 12b, 12c ; 14a, 14b, 14c) ou de la branche (12b, 14b) s'étendant parallèlement à la mâchoire de la forme de L est plié.

6. Pince d'installation (10) selon l'une des revendications précédentes, **caractérisée en ce qu'**au moins des faces frontales adjacentes des mâchoires (12, 14) présentent chacune un évidement (12d, 14d).

7. Pince d'installation (10) selon la revendication 6, **caractérisée en ce que** les deux faces frontales de chaque mâchoire (12, 14) présentent chacune un évidement (12d, 12e, 14d).

8. Pince d'installation (10) selon la revendication 6 ou 7, **caractérisée en ce que** l'évidement (12d, 12e, 14d) est réalisé en forme de V.

9. Pince d'installation (10) selon l'une des revendications précédentes, **caractérisée en ce que** les premières extrémités (12y, 14y) des deux mâchoires (12, 14) sont reliées entre elles par l'intermédiaire d'une section de liaison (16) et que la section de liaison (16) présente une ouverture (18).

10. Pince d'installation (10) selon l'une des revendications précédentes, **caractérisée en ce que** la pince d'installation (10) présente une structure monobloc.

11. Pince d'installation (10) selon l'une des revendications précédentes, **caractérisée en ce que** la pince d'installation (10) est fabriquée en un métal.

12. Pince d'installation (10) selon l'une des revendications précédentes, **caractérisée en ce que** la pince d'installation (10) est fabriquée en acier feuillard à ressort.

13. Pince d'installation (10) selon la revendication 12, **caractérisée en ce que** l'acier feuillard à ressort présente une épaisseur qui se situe dans une plage de 0,6 mm à 1,2 mm, de préférence une épaisseur de 0,8 mm.

14. Pince d'installation (10) selon l'une des revendications précédentes, **caractérisée en ce que** les sections (12a, 12b, 12c ; 14a, 14b, 14c) des deux mâchoires (12, 14) présentent une largeur perpendiculaire à l'étendue longitudinale des mâchoires (12, 14) qui se situe dans la plage de 10 mm à 30 mm, est de préférence de 12 mm.
